(19) Europäisches Patentamt

European Patent Office

Office européen des brevets

(11) **EP 1 304 837 A1**

(12) **DEMANDE DE BREVET EUROPEEN**

(43) Date de publication:
**23.04.2003 Bulletin 2003/17**

(51) Int Cl.7: **H04L 12/40**, H04L 29/14

(21) Numéro de dépôt: **02292580.4**

(22) Date de dépôt: **18.10.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **22.10.2001 FR 0113579**

(71) Demandeur: **Renault**
**92100 Boulogne Billancourt (FR)**

(72) Inventeurs:
• **Artur, Philippe**
**78150 Le Chesnay (FR)**
• **Rousseau, Franck**
**92260 Fontenay aux Roses (FR)**

(54) **Coupleur logique dans un réseau de communication**

(57) Coupleur logique entre au moins deux parties d'un réseau électrique de communication, chacune comprenant un bus de transmission à deux fils auxquels sont connectés des modules fonctionnant avec le même débit, utilisant des protocoles de communication identiques et étant de plus connectés chacun à un pilote de ligne transcodant les signaux différentiels circulant sur les bus en signaux logiques, caractérisé en ce qu'il comporte un système logique de verrouillage (2), transférant les bits dominant à l'état 0 de la ligne de réception d'un premier bus à la ligne de transmission de l'autre bus en forçant la ligne de transmission du premier bus à rester à un niveau logique récessif à l'état 1 tant que la ligne de réception associée est à l'état dominant et gérant les collisions en maintenant le niveau dominant présent sur l'une des lignes de réception du coupleur prioritaire sur les deux lignes de transmission du coupleur.

Fig. 2

EP 1 304 837 A1

## Description

La présente invention concerne un coupleur logique entre au moins deux parties d'un réseau électrique de communication, de type multiplexé intersystèmes.

Dans le domaine automobile, l'électronique embarquée intègre de plus en plus de fonctionnalités complexes, entraînant un accroissement de la quantité d'informations échangées entre les différents calculateurs qui sont connectés sur le réseau multiplexé de communication. Ces calculateurs assurent le contrôle de la gestion du moteur du véhicule, du tableau de bord, de l'habitacle, du système de freinage assisté A.B.S., de l'AIRBAG, de la climatisation ou de la boîte de vitesse automatique par exemple. Actuellement, le réseau intersystèmes est de type CAN - Controller Area Network -, avec un bus constitué d'une paire de fils fonctionnant en différentiel. La valeur de la différence de tension entre deux fils détermine l'état récessif, ou 1, et l'état dominant du bus, ou 0. Pour optimiser la capacité de transmission du bus, la procédure d'arbitrage, en cas de collision de plusieurs messages, doit permettre l'accès au bus du message le plus prioritaire sans destruction de la trame en cours.

Le dispositif C.S.M.A./C.A. - Carrier Sensor Multiple Access/Collision Avoidance - permet d'éviter les conflits d'accès au bus pendant la durée d'un bit, en assignant un niveau de priorité à chacun des messages transportés, autorisant alors au transmetteur le plus prioritaire de continuer à émettre et au moins prioritaire de commuter en réception.

Pour augmenter la capacité d'un réseau, il faudrait augmenter le nombre de noeuds auxquels de nouveaux calculateurs pourraient se connecter. Mais au-delà d'un nombre limité de noeuds, le réseau CAN est saturé en charges électriques car trop de calculateurs émettent sur le bus, provoquant des déformations et des dégradations des signaux émis, et allongeant le temps de leur traitement.

Pour réaliser une isolation entre deux parties d'un réseau de communication, dans le cas de défaut détecté sur l'une des lignes du bus de multiplexage, il existe actuellement un système appelé "CAN REPEATER", développé par la Société STZP, qui permet de réaliser une isolation galvanique entre deux parties d'un réseau CAN. Quand le système détecte un défaut sur l'une des lignes du bus, il déconnecte celle-ci du réseau, afin d'autoriser le dialogue entre les calculateurs connectés sur l'autre partie du réseau. Par contre, quand le défaut sur la ligne endommagée disparaît, la ligne défectueuse n'est pas automatiquement reconnectée au reste du réseau. De plus, l'encombrement total ainsi que le coût ne sont pas compatibles avec une application automobile.

Le but de l'invention est donc de réaliser une isolation électrique entre au moins deux parties distinctes d'un réseau électrique multiplexé, tout en maintenant la continuité logique des informations qui transitent. Ainsi, si une ligne comporte un défaut, l'autre ligne du réseau continue à fonctionner normalement sans trame d'erreur, et quand le défaut disparaît, le coupleur logique reliant ces deux parties du réseau permet de retrouver immédiatement un coupleur logique entre les deux bus du réseau puisque la ligne défectueuse n'a pas été déconnectée du réseau pendant la période de défaut.

Pour cela, l'objet de l'invention est un coupleur logique entre au moins deux parties d'un réseau électrique de communication, chacune comprenant un bus de transmission à deux fils auxquels sont connectés des modules fonctionnant avec le même débit, utilisant des protocoles de communication identiques et étant de plus connectés chacun à un pilote de lignes transcodant les signaux différentiels circulant sur les bus en signaux logiques, caractérisé en ce qu'il comporte un circuit logique de verrouillage, transférant les bits dominant à l'état 0 de la ligne de réception d'un premier bus à la ligne de transmission de l'autre bus en forçant la ligne de transmission du premier bus à rester à un niveau logique récessif à l'état 1 tant que la ligne de réception associée est à l'état dominant et gérant les collisions en maintenant le niveau dominant présent sur l'une des lignes de réception du coupleur prioritaire sur les deux lignes de transmission du coupleur.

D'autres caractéristiques et avantages de l'invention apparaîtront à la lecture de la description d'un exemple de réalisation, illustrée par les figures suivantes qui sont :

- la figure 1 : un schéma de principe du coupleur logique entre deux bus multiplexés, selon l'invention ;
- la figure 2 : un schéma synoptique du coupleur logique entre deux bus multiplexés, selon l'invention ;

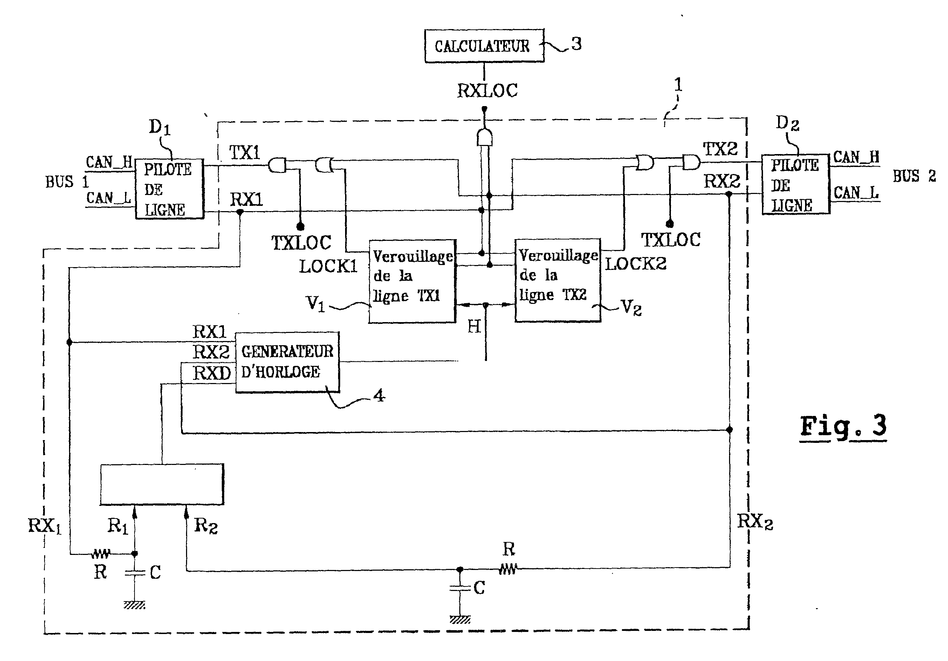

- la figure 3 : un schéma détaillé du circuit de verrouillage du coupleur logique selon l'invention ;
- la figure 4 : des chronogrammes des signaux logiques circulant à travers le coupleur logique selon l'invention.

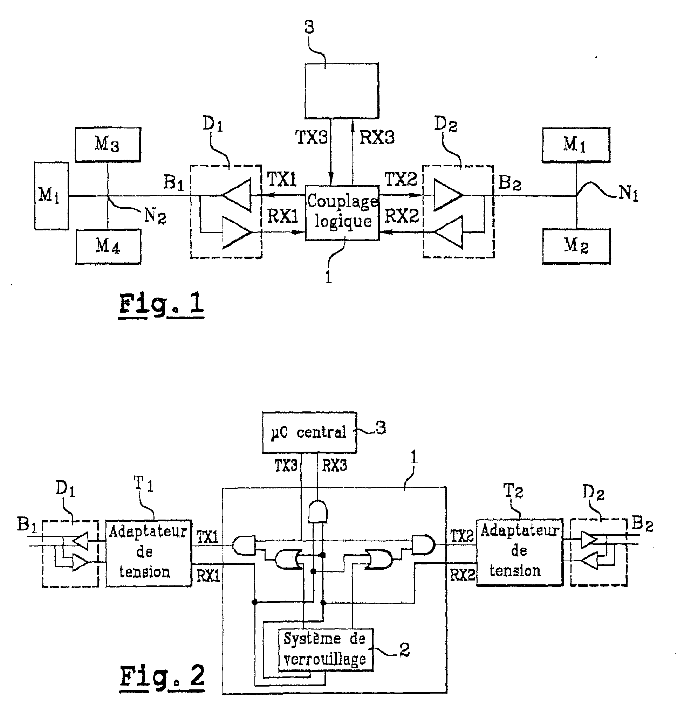

Comme le montre la figure 1, le coupleur logique 1 selon l'invention relie deux parties, ou sous-réseaux, d'un réseau électrique de communication de type multiplexé tel un réseau C.A.N. par exemple. Chaque sous-réseau comprend un bus, $B_1$ et $B_2$, auquel sont connectés des modules ou calculateurs $M_1$, $M_2$, $M_3$, $M_4$ ..., $M_i$, au niveau de noeuds $N_1$ et $N_2$ par exemple. Chaque bus de transmission est constitué de deux fils, transportant des signaux en mode différentiel afin d'être peu sensibles aux parasites. Le coupleur logique 1 relie ces deux bus de telle sorte que la ligne de chacun des bus émettant des signaux vers le coupleur 1 est dite ligne de réception, $RX_1$ et $RX_2$, pendant que la seconde ligne de chaque bus qui reçoit les signaux sortant du coupleur est appelée ligne de transmission, $TX_1$ et $TX_2$. Pour transcoder les signaux différentiels des bus en signaux logiques, qui seront exploités par le contrôle du protocole de décodage d'adresses de chaque module connecté au réseau, il faut placer un pilote de ligne $D_1$ et $D_2$ à l'entrée de chaque bus $B_1$ et $B_2$ sur le coupleur logique 1.

Le coupleur logique selon l'invention est applicable aux réseaux de communication de type CSMA/CA, afin d'éviter les conflits d'accès au bus, ou collisions, en assignant un niveau de priorité à chacun des messages transportés sur le réseau. En cas de collision, c'est message le plus prioritaire émis par un module qui gagne le bus.

Comme le montre la figure 1, il est possible de connecter au moins un module 3 au coupleur logique 1.

Le rôle du coupleur logique 1 est d'assurer le transfert des informations circulant sur l'un des deux bus vers l'autre bus, en tenant compte des collisions d'une part et des éventuels défauts apparaissant sur l'un des bus d'autre part. Pour cela, le coupleur logique 1 comporte un système de verrouillage 2, qui permet le transfert d'un bit de niveau logique dominant 0 d'un bus vers l'autre bus, sans que le système se bloque dans une situation irréversible.

Dans le cas d'un coupleur logique entre deux bus $B_1$ et $B_2$ et relié de plus à un calculateur central 3, représenté sur la figure 2, si un bit de niveau dominant 0 est présent sur la ligne de réception $RX_2$ du bus $B_2$, il va se propager sur la ligne de transmission $TX_1$ du bus $B_1$ et sur la ligne de réception $RX_3$ du calculateur 3.

En raison de la conception interne des pilotes de lignes $D_1$ et $D_2$, chaque ligne de transmission TX d'un bus est rebouclée sur sa ligne de réception RX. Par conséquent, le bit de niveau 0 présent sur la ligne $TX_1$ se retrouve également sur la ligne $RX_1$ du même bus B1 et sur la ligne $TX_2$ du bus $B_2$. Pour éviter que les deux bus $B_1$ et $B_2$ se retrouvent dans un état dominant 0 permanent et irréversible, le coupleur logique 1 comprend un circuit de verrouillage 2, qui vient forcer la ligne de transmission $TX_2$ du bus $B_2$ au niveau logique récessif 1 quand la ligne de réception $RX_2$ de ce même bus est à un niveau logique dominant 0.

Ce système de verrouillage 2 gère de plus les problèmes de collision, quand une ligne de réception du coupleur $RX_1$ ou $RX_2$ provenant d'un des deux bus $B_1$ ou $B_2$ passe d'un niveau logique dominant 0 à un niveau récessif 1, alors que l'autre ligne de réception reste au niveau dominant 0. Pour cela, il maintient le niveau dominant 0 prioritaire sur les deux lignes de transmission $TX_1$ et $TX_2$ des deux bus respectifs $B_1$ et $B_2$ jusqu'à ce que la ligne de réception à l'état dominant 0 au moment de la collision bascule à l'état récessif 1, à son tour.

Concernant l'apparition de défauts sur l'un des bus, si l'un d'eux est en erreur, en raison de la présence d'un court-circuit ou d'un circuit ouvert sur l'une de ses lignes, ou en raison d'une perte d'alimentation électrique par exemple, le système de verrouillage 2 autorise un fonctionnement sans erreur du sous-réseau isolé par le coupleur logique 1.

Selon le schéma synoptique de la figure 2, le coupleur logique 1 est relié aux deux bus $B_1$ et $B_2$ d'une part par un pilote de ligne $D_1$ et $D_2$ respectivement, comme cela a été décrit précédemment, mais d'autre part, par un adaptateur de tension $T_1$ et $T_2$ permettant d'avoir un signal d'entrée sur la ligne de réception du coupleur en provenance de chaque bus, qui soit au niveau dominant à l'état 0 quel que soit le pilote de ligne utilisé, par exemple si le bus multiplexé n'est pas de type CAN.

Selon l'invention, le coupleur logique peut être relié à un calculateur central 3 qui va émettre simultanément sur les deux bus $B_1$ et $B_2$ et recevoir également les données circulant sur eux. En émission, le calculateur 3 est prioritaire vis-à-vis des signaux présents sur les lignes de réception $RX_1$ et $RX_2$ du coupleur logique.

Le coupleur 1 est constitué de portes logiques ET et OU, destinées à combiner logiquement les signaux circulant sur les lignes de transmission et de réception de manière à transférer les signaux des lignes de réception du coupleur $RX_1$ et $RX_2$, ainsi que ceux de la ligne de transmission $TX_3$ du module 3 respectivement vers les lignes de transmission $TX_2$ et $TX_1$. De la même façon, la ligne de réception $RX_3$ du module 3 recevra les signaux provenant des lignes de réception du coupleur $RX_1$ et $RX_2$ issues des bus $B_1$ et $B_2$. Pour cela, les fonctions logiques réalisées dans le coupleur sont notamment :

$$TX_1 = TX_3 \text{ ET } RX_2$$

$$TX_2 = TX_3 \text{ ET } RX_1$$

$$RX_3 = RX_1 \text{ ET } RX_2.$$

Le système de verrouillage 2, qui tient compte des collisions et des éventuels défauts, est constitué de deux bascules logiques de type D, $V_1$ et $V_2$, qui reçoivent chacune les signaux circulant sur les lignes de réception $RX_1$ et $RX_2$ du coupleur ainsi qu'un signal d'horloge H provenant d'un circuit générateur d'horloge 4. Ce générateur d'horloge reçoit en entrée d'une part les signaux circulant sur les deux lignes de réception $RX_1$ et $RX_2$ et d'autre part ces mêmes signaux retardés, $R_1$ et $R_2$, par une cellule R-C externe et recombinés pour donner un signal RXD. Il génère un signal d'horloge H qui va commander les deux bascules $V_1$ et $V_2$, afin de réaliser un circuit de verrouillage des lignes de transmission qui permet le passage des bits dominants de part et d'autre du coupleur logique 1, entre les deux bus $B_1$ et $B_2$. Chacune des bascules délivre un signal $LOCK_1$, $LOCK_2$ respectivement qui va être associé, dans une porte logique OU, au signal provenant de la ligne de réception $RX_1$, $RX_2$ pour verrouiller la ligne de transmission correspondante $TX_1$, $TX_2$.

Concernant ces cellules R-C, il ne doit pas y avoir une dispersion trop importante entre elles deux, et la valeur de leur constante de temps $\tau_{RC}$ doit être supérieure au temps de retard maximal introduit par les pilotes et inférieure à l'instant du point d'échantillonnage par le contrôleur du protocole.

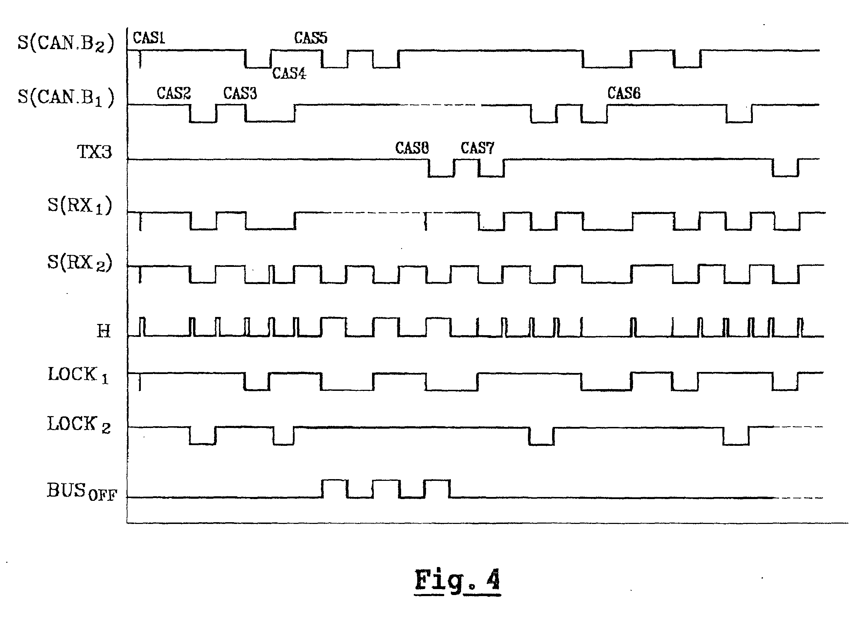

La figure 4 représente les chronogrammes des différents signaux apparaissant dans le coupleur logique 1.

Les deux premiers signaux S(CAN $B_2$) et S(CAN B1) représentent les différents bits circulant sur les deux bus $B_2$ et $B_1$ des deux sous-réseaux CAN reliés par le coupleur logique selon l'invention. Le troisième signal ($TX_3$) représente les bits émis par le calculateur central 3 sur sa ligne de transmission $TX_3$ vers le coupleur. Les deux signaux suivants S($RX_1$) et S($RX_2$) représentent la succession des bits apparaissant sur les lignes de réception $RX_1$ et $RX_2$ du coupleur en provenance des bus $B_1$ et $B_2$ respectivement. Le sixième signal H est émis par le générateur d'horloge 4 pour commander les deux bascules $V_1$ et $V_2$ de verrouillage, qui elles-mêmes vont délivrer respectivement un signal $LOCK_1$ et $LOCK_2$ de verrouillage des lignes de transmission $TX_1$ et $TX_2$. Le neuvième signal $BUS_{OFF}$ représente.

Les chronogrammes font apparaître tous les cas de fonctionnement possibles entre deux bus $B_1$ et $B_2$ de type CAN et un calculateur central 3 reliés à un coupleur logique selon l'invention.

Le cas 1 fait apparaître un "glitch", ou impulsion parasite de très faible largeur, sur le bus $B_1$. On constate que le système reste stable. Ce glitch est transmis sur les deux lignes $TX_1$ et $TX_2$, sans gêner le protocole CAN et sans entraîner de resynchronisation.

Le cas 2 correspond à l'apparition d'un bit dominant à l'état 0 sur le bus $B_1$, qui apparaît donc sur la ligne de réception $RX_1$.

Le cas 3 correspond à la présente simultanée d'un bit dominant à l'état 0 sur les deux bus $B_1$ et $B_2$.

Le cas 4 correspond à une collision sur le bus $B_2$, c'est-à-dire que le signal passe du niveau dominant 0 au niveau récessif 1, alors que l'autre bus $B_1$ reste au niveau dominant 0.

On remarque que le niveau dominant demeure sur les deux lignes de réception $RX_1$ et $RX_2$ jusqu'à la remontée à un niveau récessif 1 du bus $B_1$.

Au moment où ce bus $B_1$ remonte à un niveau récessif, une impulsion apparaît sur la ligne de réception $RX_2$ correspondante. Sa largeur est équivalente au temps de retard introduit par la cellule externe RC, mais elle n'engendre pas de resynchronisation, donc ne perturbe pas le protocole CAN.

Il faut éviter que le temps de retard introduit par cette cellule RC ne soit pas trop grand pour ne pas introduire d'erreur sur le point d'échantillonnage. Le cas 5 correspond à l'apparition d'un bit dominant 0 sur le bus $B_2$.

Le cas 6 correspond à l'apparition d'un bit dominant 0 sur la ligne de transmission $TX_3$ du module 3, en même temps qu'un "bus off" sur le bus $B_1$. Si l'un des bus est hors service, dû à un défaut de type court-circuit ou circuit ouvert par exemple, le second bus qui est isolé par le coupleur logique, continue à fonctionner correctement sans trame d'erreur.

Le cas 7 correspondant à l'émission d'un bit dominant 0 sur la ligne de transmission $TX_3$ du module électronique 3. Il a priorité sur les signaux circulant sur les bus $B_1$ et $B_2$.

Le cas 8 correspond à une collision sur le bus $B_1$, sans création d'un glitch.

On constate que tout bit dominant à l'état 0 présent sur l'un des bus se propage sur l'autre bus et sur la ligne de réception $RX_3$ du calculateur central, par l'intermédiaire du coupleur logique.

Selon une autre version, il est possible d'ajouter des optocoupleurs sur les lignes de transmission et de réception d'un ou des deux bus afin de rendre les deux sous-réseaux reliés au coupleur logique complètement isolés électriquement, ce qui supprime tout problème de masse commune.

Le coupleur selon l'invention a pour avantage de pouvoir être entièrement intégré dans un composant programmable permettant de regrouper les fonctions logiques nécessaires pour réaliser le système de verrouillage.

Selon le type d'application, il est possible d'utiliser un composant de type FPGA déjà présent ou bien d'intégrer ce coupleur dans un composant programmable discret, tel un P.A.L. - Programmable Array Logic -.

Il a l'avantage d'être également très peu encombrant et d'un coût de revient très faible.

Un autre intérêt de l'invention provient de ce que le blocage d'un sous-réseau à l'état récessif, pour toute raison entraînant une tension différentielle inférieure au seuil de commutation du comparateur, ne gêne pas le fonctionnement des autres sous-réseaux et ne nécessite pas l'intervention du module hôte. La défaillance peut être détectée dans le module hôte par une surveillance du trafic sur les sous-réseaux.

En cas de bruit anormal sur l'un d'eux, les entrées de contrôle isolent rapidement le réseau et le reconnecte logiquement après cessation des perturbations.

**Revendications**

1. Coupleur logique entre au moins deux parties d'un réseau électrique de communication, chacune comprenant un bus de transmission à deux fils auxquels sont connectés des modules fonctionnant avec le même débit, utilisant des protocoles de communication identiques et étant de plus connectés chacun à un pilote de ligne transcodant les signaux différentiels circulant sur les bus en signaux logiques, **caractérisé en ce qu'**il comporte un système logique de verrouillage (2), transférant les bits dominant à l'état 0 de la ligne de réception d'un premier bus à la ligne de transmission de l'autre bus en forçant la ligne de transmission du premier bus à rester à un niveau logique récessif à l'état 1 tant que la ligne de réception associée est à l'état dominant et gérant les collisions en maintenant le niveau dominant présent sur l'une des lignes de réception du coupleur prioritaire sur les deux lignes de transmission du coupleur.

2. Coupleur logique selon la revendication 1, **caractérisé en ce que** le système logique de verrouillage (2) comporte :

   - deux bascules ($V_1$ et $V_2$) de type D, recevant chacune les signaux circulant sur les lignes de réception ($RX_1$ et $RX_2$) du coupleur issues des deux bus ($B_1$ et $B_2$) et commandées par un signal d'horloge (H) ;
   - un circuit générateur d'horloge (4) recevant en entrée, d'une part, les signaux circulant sur lesdites deux lignes de réception ($RX_1$ et $RX_2$) du coupleur et, d'autre part, ces mêmes signaux retardés ($R_1$ et $R_2$) par une cellule R-C externe et un signal (RXD) issu de leur combinaison logique, et destiné à générer ledit signal d'horloge (H) commandant les deux bascules ; et **en ce que** chacune des bascules délivre un signal ($LOCK_1$, $LOCK_2$) respectivement qui est associé, dans une porte logique OU au signal de la ligne de réception ($RX_1$ et $RX_2$) pour verrouiller la ligne de transmission correspondante ($TX_1$ et $TX_2$).

3. Coupleur logique selon la revendication 2, **caractérisé en ce qu'**un circuit adaptateur de tension ($T_1$, $T_2$) est placé, pour chaque bus ($B_1$, $B_2$), entre le pilote de ligne ($D_1$, $D_2$) et le coupleur logique (1), et destiné à ce que les bits au niveau dominant du signal d'entrée sur les lignes de réception du coupleur en provenance des bus ($B_1$, $B_2$) soient à l'état 0 quel que soit le pilote de ligne ($D_1$, $D_2$).

## Fig. 1

Couplage logique

## Fig. 2

µC central

Adaptateur de tension

Système de verrouillage

Fig. 3

EP 1 304 837 A1

Fig. 4

Office européen
des brevets

**RAPPORT DE RECHERCHE EUROPEENNE**

Numéro de la demande

EP 02 29 2580

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 4 881 244 A (HAUG FRIEDRICH) 14 novembre 1989 (1989-11-14) * abrégé * * colonne 2, ligne 44 - colonne 3, ligne 3 * * colonne 5, ligne 35-50; figure 3 * | 1-3 | H04L12/40 H04L29/14 |
| A | US 6 115 831 A (HANF PETER ET AL) 5 septembre 2000 (2000-09-05) * abrégé * | 1-3 | |
| A | FR 2 701 325 A (RENAULT) 12 août 1994 (1994-08-12) * abrégé * * page 7, ligne 23 - page 8, ligne 34; figure 2 * | 1-3 | |

|  | DOMAINES TECHNIQUES RECHERCHES (Int.Cl.7) |
|---|---|
|  | H04L B60R |

Le présent rapport a été établi pour toutes les revendications

| Lieu de la recherche | Date d'achèvement de la recherche | Examinateur |
|---|---|---|
| LA HAYE | 26 février 2003 | Hardelin, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 2580

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-02-2003

| Document brevet cité au rapport de recherche | | Date de publication | Membre(s) de la famille de brevet(s) | | Date de publication |
|---|---|---|---|---|---|
| US 4881244 | A | 14-11-1989 | AT | 77720 T | 15-07-1992 |
| | | | DE | 3700293 A1 | 23-06-1988 |
| | | | DE | 3780022 D1 | 30-07-1992 |
| | | | EP | 0274679 A1 | 20-07-1988 |
| US 6115831 | A | 05-09-2000 | DE | 19611944 A1 | 02-10-1997 |
| | | | AT | 200932 T | 15-05-2001 |
| | | | AT | 205940 T | 15-10-2001 |
| | | | DE | 59703473 D1 | 07-06-2001 |
| | | | DE | 59704664 D1 | 25-10-2001 |
| | | | DE | 59708294 D1 | 31-10-2002 |
| | | | WO | 9736399 A1 | 02-10-1997 |
| | | | WO | 9736183 A1 | 02-10-1997 |
| | | | WO | 9736184 A1 | 02-10-1997 |
| | | | EP | 0890242 A1 | 13-01-1999 |
| | | | EP | 0798895 A1 | 01-10-1997 |
| | | | EP | 0890109 A1 | 13-01-1999 |
| | | | EP | 0890110 A1 | 13-01-1999 |
| | | | ES | 2158538 T3 | 01-09-2001 |
| | | | JP | 2824903 B2 | 18-11-1998 |
| | | | JP | 10024783 A | 27-01-1998 |
| | | | JP | 11508434 T | 21-07-1999 |
| | | | JP | 3294852 B2 | 24-06-2002 |
| | | | JP | 2000505262 T | 25-04-2000 |
| | | | JP | 3263813 B2 | 11-03-2002 |
| | | | JP | 2000501268 T | 02-02-2000 |
| | | | KR | 213808 B1 | 02-08-1999 |
| | | | KR | 2000004924 A | 25-01-2000 |
| | | | KR | 2000004941 A | 25-01-2000 |
| | | | KR | 2000005045 A | 25-01-2000 |
| | | | US | 6405330 B1 | 11-06-2002 |
| | | | US | 6396282 B1 | 28-05-2002 |
| FR 2701325 | A | 12-08-1994 | FR | 2701325 A1 | 12-08-1994 |

EPO FORM P0460

Pour tout renseignement concernant cette annexe : voir Journal Officiel de l'Office européen des brevets, No.12/82